# EUROPEAN PATENT APPLICATION

(11) **EP 1 380 968 A2**
(43) Date of publication of application: **14.01.2004**
(21) Application number: 03101985.4
(22) Date of filing: 02.07.2003
(51) Int. Cl.: G06F 17/30

(54) **Apparatus, method and system for a problem solving support, and a medium storing a program therefor**

(30) Priority: 08.07.2002 JP 2002198204; 24.04.2003 JP 2003120657; 30.04.2003 JP 2003126068
(71) Applicant: Cannac, Inc., Tokyo 101-0047 (JP)
(72) Inventor: Shimada, Kazumi, Uchikanda Chiyoda-ku Tokyo, 101-0047 (JP); Katayama, Yuji, Uchikanda Chiyoda-ku Tokyo, 101-0047 (JP); Sato, Noriaki, Uchikanda Chiyoda-ku Tokyo, 101-0047 (JP); Narumi, Takeshi, Uchikanda Chiyoda-ku Tokyo, 101-0047 (JP)
(74) Representative: Weihs, Bruno

(57) **Abstract**

A problem solving support apparatus 100 for supporting problem solving for users of an electronic device 10 based on user input on how to use the device. The device includes: a related icon storage section 120 which stores a plurality of icons, which are images having appearance conceptually associated with at least a part of an entry word, in association with the entry word which specifies problem solving functions of the electronic device; a candidate icon display section 110 which displays at least a part of the plurality of icons that are candidates for accepting selections from outside on a screen; and an entry word extract section 130 which refers to the related icon storage section 120 to extract the entry word and display the extracted entry word based on combinations of two or more icons when the two or more icons are selected from the icons on the screen displayed by the candidate icon display section 110.

## Description

The present application claims priority from Japanese Patent Applications Nos. 2002-198204 filed on July 8, 2002, 2003-120657 filed on April 24, 2003 and 2003-126068 filed on April 30, 2003, the contents of which are incorporated herein as reference.

### BACKGROUND OF THE INVENTION

### Field of the Invention

The present invention relates to an apparatus, method and system for a problem solving support, and computer readable medium storing thereon a program therefor. More particularly, the present invention relates to a problem solving support apparatus, a problem solving support method, and problem solving support system and a medium storing thereon a program for supporting problem solving for electronic device users based on user input on how to use the device.

### Related Art

Conventionally, icons corresponding to each function of an electronic device, such as a portable telephone, are displayed on a screen. When there are a number of functions of an electronic device, some electronic devices hierarchically display icons corresponding to the upper level concepts of each function as disclosed, for example in Unexamined Japanese Patent Laid-Open Application No. 2003-108280. With such devices the upper level concepts of a function to be executed are first displayed on the screen. When the user selects one of the displayed icons, lower hierarchy icons are displayed on the screen. For example, when a user attempts to execute 'send mail' and when a 'mail' icon is displayed on the screen, the icon is selected. With this operation, the lower hierarchy of 'mail', including 'send mail', is displayed on the screen. When the user selects the icon of 'send mail', the mail send function is executed.

However, the hierarchy of icons is preset by electronic device manufacturers. Therefore, unless users know this preset hierarchy, it is difficult for them to find the desired functions.

### SUMMARY OF THE INVENTION

An object of the present invention, therefore, is to provide a problem solving support system, a problem solving support method and computer readable medium storing thereon a program which is capable of solving the problems accompanying the conventional art. The above and other objects can be achieved by combinations described in the independent claims. The dependent claims define further advantageous and exemplary combinations of the present invention.

According to the first aspect of the present invention, a problem solving support apparatus for supporting problem solving for electronic device users based on user input on how to use the device, includes: a related icon storage section which stores a plurality of icons, which are images having appearance conceptually associated with at least a part of an entry word, in association with the entry word which specifies problem solving functions of the electronic device; a candidate icon display section which displays at least a part of the plurality of icons that are candidates for accepting selections from outside on a screen; and an entry word extract section which refers to the related icon storage section to extract the entry word and display the extracted entry word based on combinations of two or more icons when the two or more icons are selected from the icons on the screen displayed by the candidate icon display section.

The related icon storage section may include: an entry word storage section which stores a plurality of element words indicating concepts of the functions of the entry word in association with the entry words; and a corresponding element word storage section which stores the icons having the appearance conceptually associated with the element word in association with each of the plurality of the element words, and the entry word extract section may refer to the corresponding element word storage section to extract the element word which corresponds to each of two or more icons, refers to the entry word storage section to extract the entry word which corresponds to at least two element words among the element words from the entry word storage section, and displays the extracted entry word when the two or more icons are selected.

The corresponding element word storage section may associate at least one of the element words with the plurality of icons and stores them.

The corresponding element word storage section may associate at least one of the icons with the plurality of element words and stores them.

The problem solving support apparatus may further include an element word display section which displays the element word corresponding to the tentatively selected icon when the icon is tentatively selected.

The entry word extract section may require an input of a decision command for search after two or more icons, among the plurality of icons displayed on the screen by the candidate icon display section, are selected, and display the entry word based on the input of the decision command for search.

The problem solving support apparatus may further include a select icon display section which displays the two or more selected icons on the screen.

The problem solving support apparatus may further include a candidate icon regulating section which refers to the related icon storage section to extract other icons which correspond to the entry word corresponding to the selected icon and receives selections of the other extracted icons when the icon is selected among the icons on the screen displayed by the candidate icon display section.

The candidate icon regulating section may display the extracted icons excluding the other icons stored in the related icons storage section on the screen.

The candidate icon regulating section may distinguish the extracted icons from the other icons stored in the related icon storage section and displays them on the screen.

The entry word extract section may display the entry word on the screen when the number of the extracted entry words is less than a predetermined number.

The entry word extract section may display the entry word on the screen when the number of the entry words to be displayed on the screen is less than the predetermined number.

The problem solving support apparatus may further include: an execution program group storage file which stores an execution program for executing the functions for the problem solving which correspond to entry words specifying the functions of the electronic devices for the problem solving; and a processing section which refers to the execution program group storage file to execute the execution program corresponding to the specified entry words when an execution command for the displayed entry word is input.

According to the second aspect of the present invention, a problem solving support method for supporting problem solving for electronic device users based on user input on how to use the device includes steps of: storing a plurality of icons, which are images having appearance conceptually associated with at least a part of an entry word, in association with the entry word which specifies problem solving functions of the electronic device; displaying at least a part of the plurality of icons that are candidates for accepting selections from outside on a screen; referring to the related icon storage section to extract the entry word based on combinations of two or more icons when the two or more icons are selected from the icons displayed on the screen; and displaying the extracted entry word.

According to the third aspect of the present invention, a program for supporting problem solving for electronic device users based on user input on how to use the device causes a computer to function as: related icon storage means for storing a plurality of icons, which are images having appearance conceptually associated with at least a part of an entry word, in association with the entry word which specifies problem solving functions of the electronic device; candidate icon display means for displaying at least a part of the plurality of icons that are candidates for accepting selections from outside on a screen; and entry word extract means for referring to the related icon storage means to extract the entry word and display the extracted entry word based on combinations of two or more icons when the two or more icons are selected from the icons on the screen displayed by the candidate icon display section.

According to the fourth aspect of the present invention, a problem solving support system for supporting problem solving for electronic device users based on user input on how to use the device, including a problem solving support apparatus stored in the electronic device and a user input device which is a separate unit of the problem solving support apparatus, and the problem solving support apparatus includes: a related icon storage section which stores a plurality of icons, which are images having appearance conceptually associated with at least a part of an entry word, in association with the entry word which specifies problem solving functions of the electronic device; a candidate icon display section which displays at least a part of the plurality of icons that are candidates for accepting selections from outside on a screen; and an entry word extract section which refers to the related icon storage section to extract the entry word and display the extracted entry word based on combinations of two or more icons when the two or more icons are selected from the icons on the screen displayed by the candidate icon display section, and the user input device receives input from the users for selecting an icon from the plurality of icons displayed on the candidate icon display section and outputs it to the entry word extract section.

The summary of the invention does not necessarily describe all necessary features of the present invention. The present invention may also be a subcombination of the features described above.

### BRIEF DESCRIPITON OF THE DRAWINGS

Figure 1 is a schematic diagram showing a configuration of a portable telephone according to an embodiment of the invention.
Figure 2 is an block diagram exemplary showing a functional configuration of a problem solving support apparatus.
Figure 3 shows an example of a data format of a corresponding element word storage section.
Figure 4 is an example of a data format of an entry word storage section.
Figure 5 is a flowchart exemplary illustrating an example of how the problem solving support apparatus works.
Figure 6 is an example illustrating an icon display on a screen.
Figure 7 is an example of an icon display on the screen.
Figure 8 is an example of an entry word display on the screen.
Figure 9 is a flowchart illustrating another example of the portable telephone operations.

### DETAILED DESCRIPTION OF THE INVENITON

The invention will now be described based on the preferred embodiments, which do not intend to limit the scope of the present invention, but exemplify the invention. All of the features and the combinations thereof described in the embodiment are not necessarily essential to the invention.

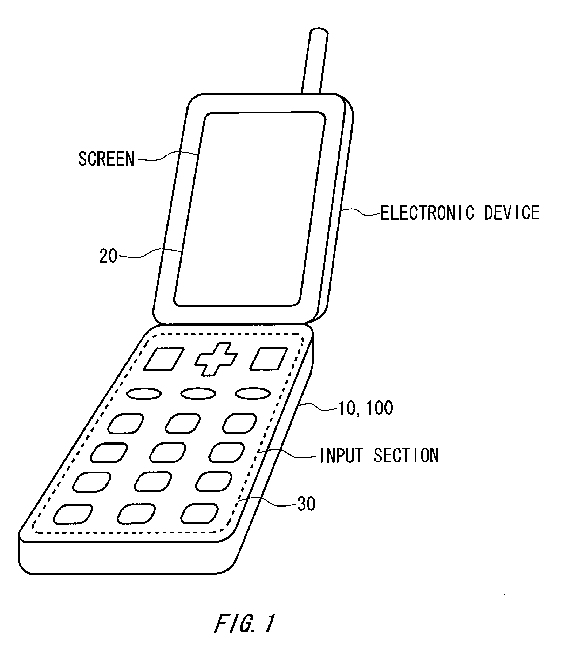

Figure 1 shows the configuration of the problem solving support apparatus 100 in the invention. The problem solving support apparatus 100 solves problems occurring in an electronic device 10, such as a portable telephone. The problem solving support apparatus 100 in the present embodiment is incorporated in the electronic device 10. Also, the problem solving support apparatus 100 can be a remote controller for an information home appliance, such as a TV. The input section 30 has operation keys, such as a select key, for user input.

Conventionally, as for the portable telephone 10, icons corresponding to each function and icons corresponding to the upper concepts of each function are hierarchically displayed. In this case, the icons corresponding to the upper concepts of a function to be executed are displayed on a screen 20. When the user selects one of the displayed icons, lower hierarchy icons are displayed on the screen 20. However, the icon hierarchy is preset by an electronic device manufacturer. Therefore, unless users understand the hierarchy preset by the manufacturers, it is difficult for them to find the desired functions.

The object of the problem solving support apparatus 100 is to enable the user of a portable telephone 10 to promptly select the function that he/she desires and then to execute it.

The problem solving support apparatus 100 supports problem solving for users of a portable telephone 10 based on user input on how to use the device. The screen 20 displays icons with appearances conceptually related to the functions of a portable telephone 10. The screen 20 also displays a cursor which circles one of the icons displayed on the screen 20, as well as one or more icons which have been selected by the user. The input section 30 accepts user input.

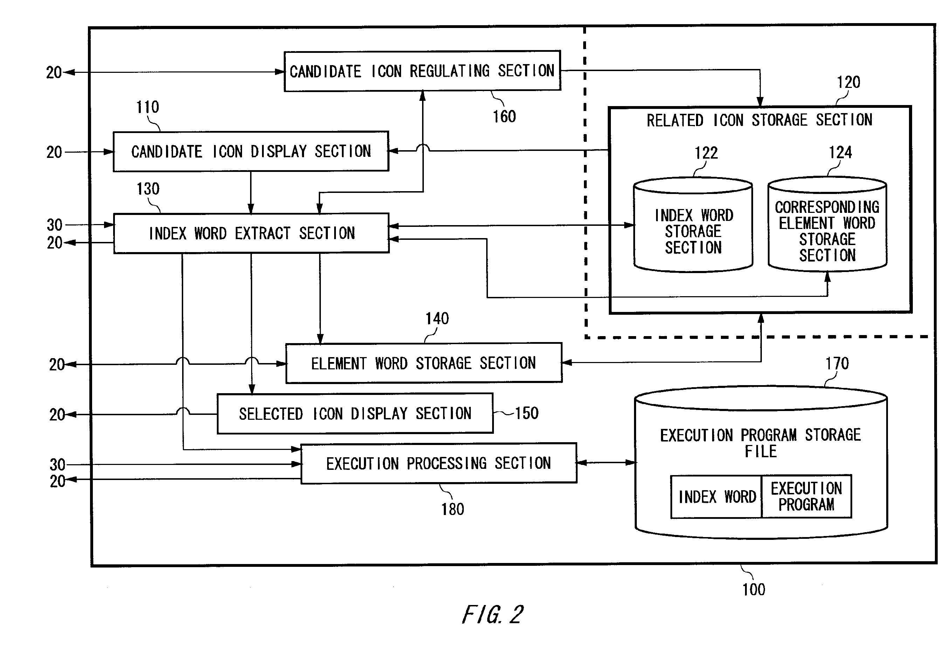

Figure 2 shows the functional configuration of the problem solving support apparatus 100. The problem solving support apparatus 100 includes a candidate icon display section 110, a related icon storage section 120, an entry word extract section 130, an element word storage section 140, a selected icon display section 150, a candidate icon regulating section 160, an execution program storage file 170, and an execution processing section 180.

The related icon storage section 120 stores a plurality of icons, which are images having appearance conceptually associated with at least a part of entry word in association with the entry word which specifies the problem solving functions of the portable telephone 10. The related icon storage section 120 includes an entry word storage section 122 and a corresponding element word storage section 124. The related icon storage section 120 can be a database outside of the portable telephone 10. In this case, the problem solving support apparatus 100 receives information stored in the related icon storage section 120 using the communications functions of the portable telephone 10. The related icon storage section 120 can be included in a recording medium which can be removed from the portable telephone 10.

The entry word storage section 122 stores element words which correspond to an entry word and express the concepts of the functions of the entry word. The entry word storage section 122 stores entry words which specify the functions of a portable telephone 10 which are for solving user issues concerning how to use the portable telephone 10. The functions of the portable telephone 10 include the operations and objects for executing the functions. With a portable telephone 10 there are cases in which the object for the operation of a function is used as an object for the operations of other functions. For example, with the functions 'Display last phone call charge' and 'Delete history of calls sent/received' of a portable telephone 10, the operations 'Display last phone call charge' and 'Delete history of calls sent/received' are carried out for the same history. In this case, the functions 'Display last phone call charge' and 'Delete history of calls sent/received' can be considered to belong to the common concept 'History'. In other words, the entry word storage section 122 stores the operations or words expressing objects which are common to the functions of a portable telephone 10 as element words indicating the concepts which belong to the functions indicating the entry words. The entry word storage section 122 may also store identification codes which are allocated to each word instead of words as character strings.

The corresponding element word storage section 124 stores icons with a related conceptual appearance to the element word for each of the element words. The corresponding element word storage section 124 in the present embodiment connects concepts which element words express with icons. The corresponding element word storage section 124 stores images having appearances (icons) which allow users to associate with concepts which the element words indicate. For example, the corresponding element word storage section 124 stores an image of an envelope which allows users to associate concepts related to mail, such as 'Send/receive mail', 'Read', and 'Create new message'. The corresponding element word storage section 124 stores at least a plurality of icons corresponding to an element word and at least a plurality of element words corresponding to one icon.

The candidate icon display section 110 displays on the same screen 20 at least some icons that are candidates for accepting selections from outside. When a user uses a portable telephone 10 and selects the 'Select icon' function mode, the candidate icon display section 110 displays an icon stored in the corresponding element word storage section 124 on the screen 20 as a candidate icon accepting the user's selection. The candidate icon display section 110 displays icons on the screen from the top in the order of high frequency of use by the user to low frequency of use. Furthermore, when there are more icons stored in the corresponding element word storage section 124 than the number of icons which can be displayed within the frame of the screen 20, the candidate icon display section 110 displays icons on the scrolling screen 20 in the order of the frequency.

The entry word extract section 130 refers to the related icon storage section 120 to extract entry words and display extracted entry words based on combinations of two or more icons when two or more icons are selected from icons on the same screen 20 displayed by the candidate icon display section 110. The entry word extract section 130 according to the present embodiment refers to the corresponding element word storage section 124 to extract element words corresponding to each of the icons when two or more icons are selected. Furthermore, the entry word extract section 130 refers to the entry word storage section 122 to extract entry words corresponding to at least two element words from the entry word storage section 122 and displays the extracted entry words. Furthermore, the entry word extract section 130 requests the input of the decision command for search after two or more icons are selected among the icons on the same screen 20 displayed by the candidate icon display section 110, and triggered by the input, the entry words are displayed. According to the present embodiment, the entry word extract section 130 requests the input of the decision command for search even when there is only one selected icon and extracts the entry words.

According to the above-mentioned embodiment, when a plurality of icons are selected, the entry word extract section 130 extracts entry words corresponding to at least two element words which are extracted from the corresponding element word storage section 124 from the entry word storage section 122 and displays them. However, the extraction and display methods of the entry word extract section 130 are not necessarily the same as one another. For example, the entry word extract section 130 may extract the most numerous entry words corresponding to element words which are extracted from the corresponding element word storage section 124. Another example is that the entry word extract section 130 may extract entry words corresponding to element words which are extracted from the corresponding element word storage section 124 and may give priority to entry words corresponding to the most numerous element words for display.

In order to solve the problems of a user of a portable telephone 10 concerning how to use the telephone, the user selects from the screen 20 icons which are associated with the functions of the telephone 10 that the user wants to use. The user moves the cursor on the screen 20 to select an icon and presses the select key on the input section 30 to set the selection. The entry word extract section 130 displays the 'Search' button on the screen 20. When the user wants to conduct a search of entry words based on the selected icon he/she presses the Select key in the input section 30 by highlighting the 'Search' button and inputs the decided search.

When an icon is selected, the entry word extract section 130 extracts all the element words corresponding to the selected icon which are stored in the corresponding element word storage section 124. The entry word extract section 130 extracts all the entry words corresponding to the element words extracted from the corresponding element word storage section 124 from the entry word storage section 122. Then, when the second icon is selected, the entry word extract section 130 extracts entry words corresponding to the second icon using the same procedure. The entry word extract section 130 compares the extracted entry words which correspond to a first icon and the extracted entry words which correspond to a second icon and extracts matching entry words.

When a third icon is selected, the entry word extract section 130 also compares the extracted entry words which correspond to the first icon, the extracted entry words which correspond to the second icon, and the extracted entry words which correspond to the third icon and extracts matching entry words. The entry word extract section 130 displays extracted entry words on the screen 20 when the decided search is input.

According to the above-mentioned embodiment, the entry word extract section 130 displays extracted entry words on the screen 20 when the decided search is input. However, there are other cases in which the entry word extract section 130 displays extracted entry words on the screen 20. For example, the entry word extract section 130 may display entry words on the screen 20 when the number of extracted entry words is a predetermined number or less. In this case, the entry word extract section 130 displays entry words on the screen 20 when the number of entry words which can be displayed within the frame of the screen 20 is a predetermined number or less. When an icon is selected, the entry word extract section 130 compares the number of extracted entry words with that of the entry words which can be displayed on the screen 20. When the number of extracted entry words is no greater than the number of entry words which can be displayed on the screen 20, the entry word extract section 130 displays the extracted entry words on the screen 20. With this feature, there are no entry words which cannot be seen without scrolling which greatly enhances operability.

The element word storage section 140 displays element words corresponding to tentatively selected icons on the screen. The user uses operation keys on the input section 30 to circle an icon displayed on the screen 20. The element word storage section 140 regards the icon to be tentatively selected when it remains circled with the cursor for at least one second. The element word storage section 140 in the present embodiment displays a bubble area for tentatively selected icons and displays element words which correspond to a tentatively selected icon to be stored in the corresponding element word storage section 124. The element word storage section 140 displays element words in the bubble area for a predetermined time (only two seconds, for example) after an icon is tentatively selected. With this feature, element words corresponding to an icon can be shown to the user and the user can select a correct icon.

The selected icon display section 150 displays two or more selected icons on the screen. The selected icon display section 150 in the present embodiment moves a selected icon on the screen 20 to a different area from the one where the candidate icon which accepts the selection is displayed and displays it as a selected icon. When there is only one selected icon, the selected icon display section 150 displays the icon as a selected icon. With this feature, the user can confirm the icon which he/she has selected.

The candidate icon regulating section 160 refers to the related icon storage section 120 to extract other icons which correspond to entry words corresponding to selected icons and receives the selection of other extracted icons when an icon is selected from icons on the same screen displayed by the candidate icon display section 110. The candidate icon regulating section 160 in the present embodiment accepts selections of other icons by displaying icons other than the extracted ones stored in the related icon storage section 120. In other words, the candidate icon regulating section 160 extracts other icons corresponding to the same entry words stored in the related icon storage section 120 as highly connected icons. Furthermore, the candidate icon regulating section 160 displays only extracted icons on the screen 20 where the candidate icons are displayed. The candidate icon regulating section 160 distinguishes extracted icons from other icons stored in the related icon storage section 120. The icons which can be selected may be displayed in gray on the screen 20.

The execution program storage file 170 stores execution programs for executing problem solving functions which correspond to entry words specifying the functions of the portable telephone 10. The execution program storage file 170 stores execution programs for executing the problem solving functions which correspond to entry words specifying the functions of the portable telephone 10 which are for solving problems of users about how to use the telephone.

The execution processing section 180 refers to the execution program group storage file to execute an execution program corresponding to predetermined entry words when an execution command for a displayed entry word is input. The user selects entry words specifying the functions of the portable telephone 10 which he/she wants to use from entry words displayed on the screen 20. The user inputs an execution command by pressing the Select key on the input section 30 after selecting entry words on the screen 20. The execution processing section 180 reads and executes an execution program stored in the execution program storage file 170 when an execution command is input.

With the configurations described above, the problem solving support apparatus 100 efficiently extracts the problem solving functions of a user about how to use the portable telephone 10 based on the user input and allows prompt execution of the program of the extracted program.

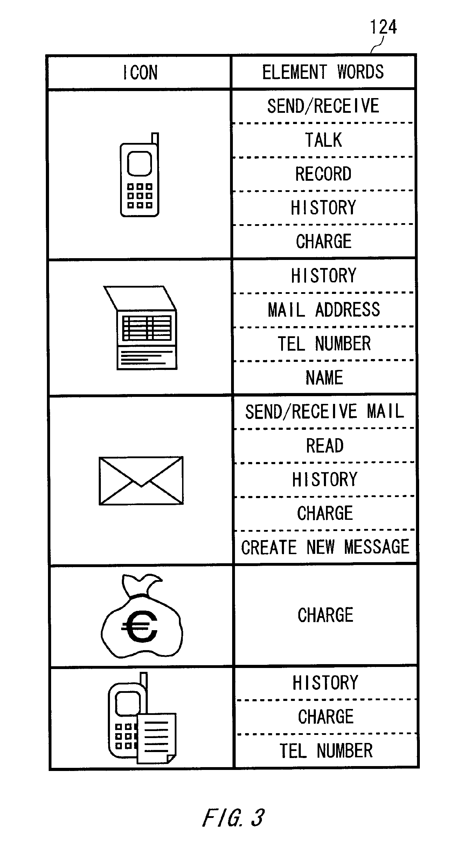

Figure 3 shows an example of the data format of the corresponding element word storage section 124. The corresponding element word storage section 124 stores icons with a related conceptual appearance to the element word for each element word. For example, the corresponding element word storage section 124 stores 'Send/receive', 'Talk', 'Record', 'History', and 'Charge' as element words which correspond to the icon 'Telephone'. With the example shown in Figure 3, the corresponding element word storage section 124 stores images of the icons. Alternatively, the problem solving support apparatus 100 includes the icon storage section in which images of the icons correspond to icon identifying information for identifying icons are stored. The corresponding element word storage section 124 may store icon identifying information for identifying icons.

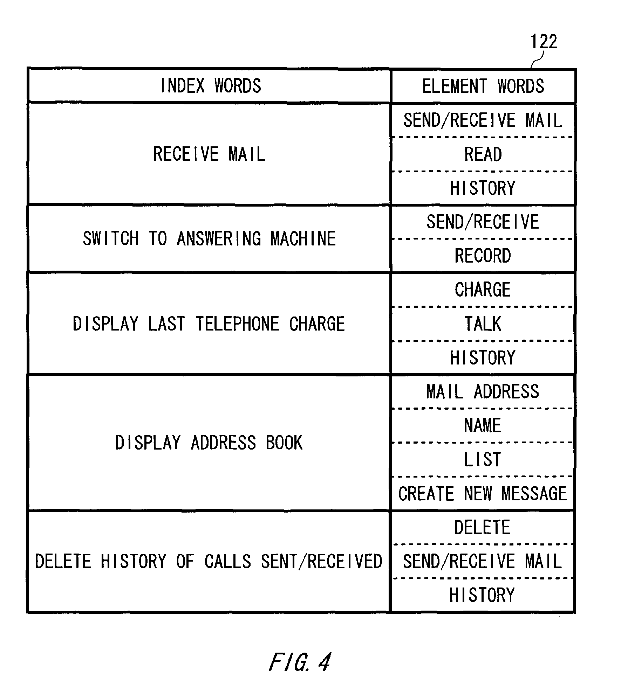

Figure 4 shows an example of the data format of the entry word storage section 122. The entry word storage section 122 stores element words indicating the concepts of the functions of entry words. For example, the entry word storage section 122 stores 'Send/receive mail', 'Read', and 'History' as element words which correspond to the entry word 'Receive mail'.

As explained above, the entry word storage section 122 and the corresponding element word storage section 124 connect entry words specifying the functions of a portable telephone 10 and the icons conceptually related to entry words using element words. The problem solving support apparatus accepts the input of character strings, extracts element words included in the character strings, and refers to the entry word storage section 122 to specify the extracted entry words with the entry word extract section 130. According to the present embodiment, the entry word storage section 122 and the entry word extract section 130 can be shared in a problem solving support system by connecting entry words and icons using element words. Furthermore, database development is easier for a database developer compared to situations where icons and entry words are connected by allocating identification codes because the appearances of icons and element words are conceptually connected.

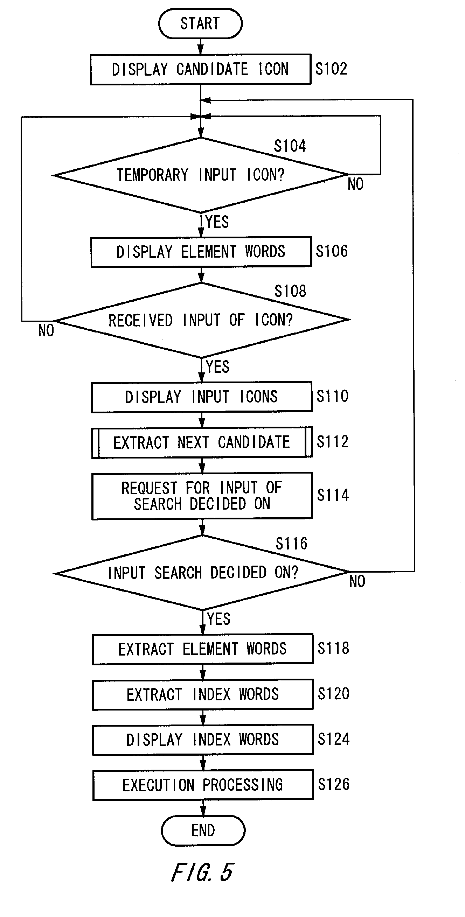

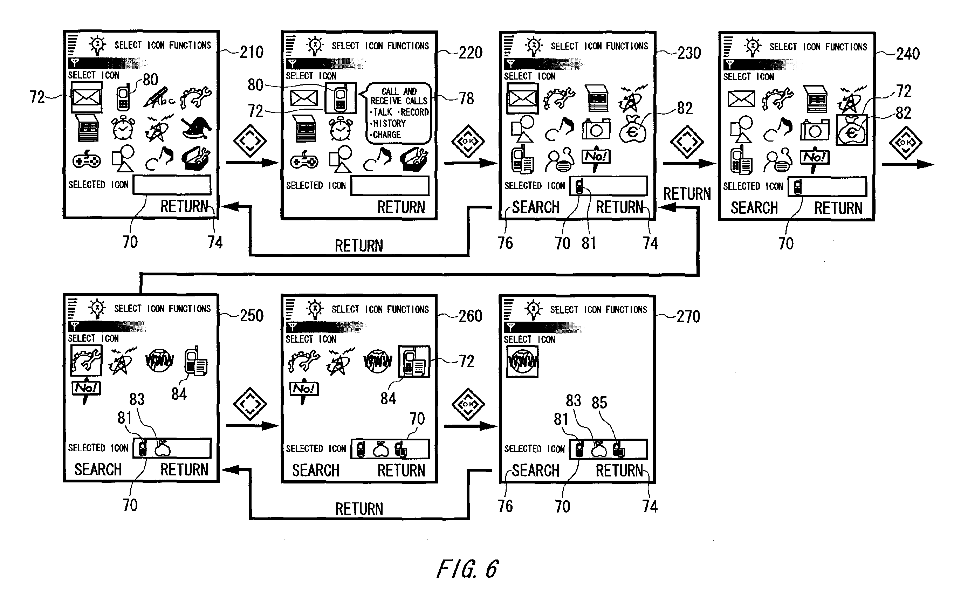

Figure 5 shows a flowchart illustrating an example of how the problem solving support apparatus 100 works. Figure 6 shows the screen in a situation where icons are selected to execute the function for displaying the telephone charge for the last call. Below is an explanation of the flowchart of Figure 5 using an example of a situation where icons are selected to execute the functions for displaying the telephone charge of the last call which is described in Figure 6.

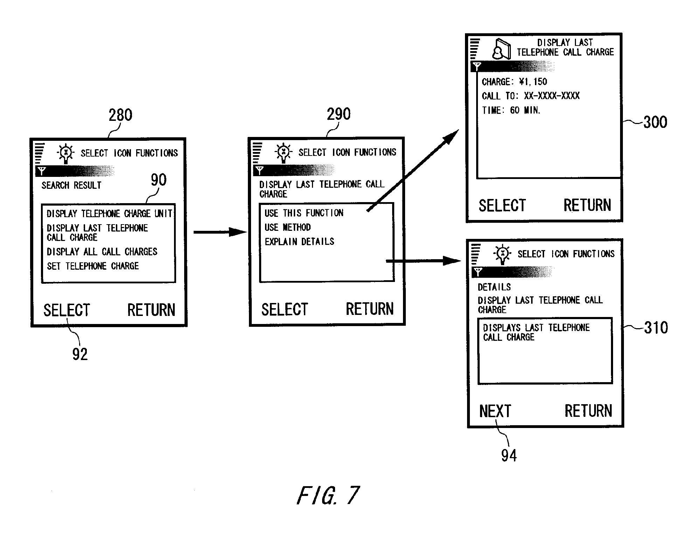

When the user selects the icon function select mode on the initial screen where he/she can select a mode from the display mode of the function names list, the display mode of the history list, and the icon function select mode, the candidate icon display section 110 displays the icons stored in the corresponding element word storage section 124 from the upper side of a first screen 210 in the order of the frequency of the user (S102). The first screen 210 displays a cursor 72 on the icon located in the upper left of the screen. On each screen of the first screen 210 to a seventh screen 270 shown in figure 7, a selected icon display frame 70 is displayed on, for example, the lower part of the screen as an area for displaying a selected icon, and a 'Return' button 74 is displayed at the lower right on the screen for returning to a previous screen from the current screen.

The element word storage section 140 judges whether the cursor 72 has circled the icon for a sufficient length of time when a candidate icon for accepting the user selection is displayed on the screen. In other words, the element word storage section 140 judges whether the icon has been tentatively selected (S104). When the icon has not been tentatively selected (S104: No) the operation of the problem solving support apparatus 100 returns to step 104. When a telephone icon 80 associated with the function of the telephone charge display is tentatively selected (S104: Yes), as shown in the second screen 220 in Figure 6, the element word storage section 140 displays a bubble area for the telephone icon which has been tentatively selected and displays the element words 'Send/receive', 'Talk', 'Record', 'History', and 'Charge' stored in the corresponding element word storage section 124 which correspond to the tentatively selected telephone icon in the displayed bubble area 78 (S106).

After the telephone icon 80 is tentatively selected, the selected icon display section 150 judges whether the telephone icon 80 has been selected by whether or not the select key on the input section 30 has been pressed (S108). When the telephone icon 80 is selected (S108: Yes), as shown in the third screen 230, the selected icon display section 150 moves the telephone icon 80 to the inside of the selected icon display frame 70 and displays it as selected telephone icon 81 (S110). When the telephone icon 80 is not selected (S108: No), the operation of the problem solving support apparatus 100 returns to step 104. The candidate icon regulating section 160 selects an icon which is closely connected with the selected telephone icon 80 as the next candidate icon (S112) and displays it on the third screen 230. How step 112 is carried out is explained below. When the telephone icon 80 is selected, the entry word extract section 130 displays the 'Search' button 76 on the lower left of the third screen 230.

The entry word extract section 130 judges whether the select key of the input section 30 has been pressed, or, in other words whether the search decision has been made (S116), while the 'Search' button 76 displayed on the third screen 230 is highlighted. When the search decision is not made (S116: No) the operation of the problem solving support apparatus 100 returns to step 104. When the 'search' decision is made (input) (S116: Yes), the entry word extract section 130 extracts all the element words stored in the corresponding element word storage section 124 which corresponds to the selected telephone icon 80. The entry word extract section 130 extracts entry words which correspond to the element words extracted from the corresponding element word storage section 124 from the entry word storage section 122. The entry word extract section 130 displays the extracted entry words on the screen (S124). When the select key on the input section is pressed while the 'Return' button 74 is highlighted on the third screen 230, the problem solving support apparatus 100 once again displays the first screen 210, on which all the candidate icons are displayed.

Below is an explanation of the screen at the time a money icon 82 and a send/receive mail history icon 84 are selected after the telephone icon 80 has been selected. The fourth screen 240 to seventh screen 270 shown in Figure 6 are explained. The fourth screen 240 shows the money icon 82 which is tentatively selected as an icon associated with the telephone charge display function. When the money icon 82 is tentatively selected and then is selected as shown in the fifth screen 250, the selected icon display section 150 moves the money icon 82 to the inside of the selected icon display frame 70 and displays it as the selected money icon 83. The candidate icon regulating section 160 extracts icons which are closely related to the selected telephone icon 80 and the money icon 82 as the next candidate icon and displays them on the fifth screen 250.

Then the sixth screen 260 shows the send/receive mail history icon 84 tentatively selected as an icon associated with the telephone charge display function. When the send/receive mail history icon 84 is tentatively selected and the send/receive mail history icon 84 is selected, the selected icon display section 150 moves the send/receive mail history icon 84 to the inside of the selected icon display frame 70 and displays it as the selected send/receive mail history icon 85 on the seventh screen 270. The candidate icon regulating section 160 extracts icons which are closely related to the selected telephone icon 80, the money icon 82, and the send/receive mail history icon 84 as the next candidate icons and displays them on the seventh screen 270.

In step 116, when the search decision is made (input) (S116: Yes), the entry word extract section 130 extracts entry words based on the selected icons (S118, S120). In the present embodiment, when more than one icon is selected, the entry word extract section 130 extracts all the element words stored in the corresponding element word storage section 124 which correspond to the selected icons. In addition, the entry word extract section 130 extracts entry words which correspond to at least two extracted element words.

When the telephone icon 80, the money icon 82, and the send/receive mail history icon 84 are selected, the entry word extract section 130 extracts element words corresponding to these icons. In the example shown in Figure 3, the entry word extract section 130 extracts 'Send/receive mail', 'Talk', 'Record', 'History', and 'Charge' as element words which correspond to the telephone icon 80. Other icons are treated in the same way. Then, the entry word extract section 130 compares the extracted entry words which correspond to the element words of the telephone icon 80, the extracted entry words which correspond to the element words of the money icon 82, and the element words of the send/receive mail history icon 84, and extracts entry words which correspond to the element words of at least two icons. With the example shown in Figure 4, the 'Display last telephone charge' corresponding with 'Talk, History, and Charge' (element words of the telephone icon 80), 'Charge' (element word of the money icon 82), and 'History and charge' (element words of send/receive mail history icon) is extracted as an entry word. The entry word extract section 130 displays the extracted entry words on the screen (S124).

Below is an explanation of the flowchart shown in Figure 5 using the screen when the 'Display last telephone charge' function is executed. The entry word extract section 130 displays 'Display charge unit', 'Display last telephone charge', 'Display all telephone charge', and 'Set telephone charge' in an entry word display frame 90 of the eighth screen 280 when the search decision is made (input). The eighth screen 280 displays a 'Select' button 92 on the lower left of the screen, which is for accepting the user's selection of an entry word. On the eighth screen 280, when the select key on the input section 30 is pressed while the 'Display last telephone charge' and 'Select' buttons are highlighted, the entry word extract section 130 displays 'Use this function', 'Display usage method', and 'Display detailed explanation' on the ninth screen 290 for 'Display last telephone charge'.

Then, when the select key on the input section 30 is pressed while the 'Use this function' button and the 'Select' button 92 are highlighted on the ninth screen 290, in other words when the command to execute a function specified by a selected entry word is input, the execution processing section 180 reads out the execution program stored in the execution program storage file 170 which corresponds to the entry word 'Display last telephone call'. The execution processing section 180 executes the execution program which has been read out (S126) and displays 'Telephone charge: ¥1, 150, Called tel number: xx-xxxx-xxxx, Time: 60 min'. on the tenth screen 300. When the Select key on the input section 30 is pressed while the 'Display detailed explanation' button and the 'Select' button 92 are highlighted on the ninth screen 290, the execution processing section 180 displays 'Last telephone charge is displayed', which is a detailed explanation for the entry word 'Display last telephone call', on the eleventh screen 310. The 'Next' button for displaying the ongoing detailed explanation is displayed at the lower left of the eleventh screen 310. The flowchart is ended hereinbefore.

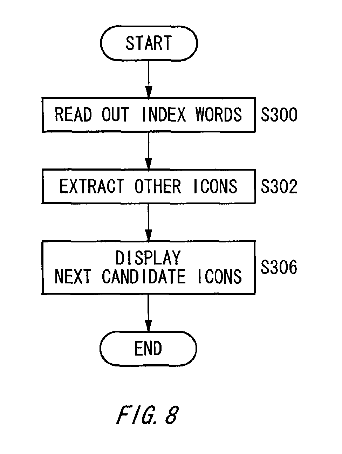

Figure 8 shows a flowchart indicating how step 112 of Figure 5 works. The candidate icon regulating section 160 extracts all the element words corresponding to the selected icon stored in the corresponding element word storage section 124. The candidate icon regulating section 160 reads out the entry words corresponding to the element word extracted from the corresponding element word storage section 124 from the entry word storage section 122 (S300). The candidate icon regulating section 160 extracts element words to be stored in the entry word storage section 122 corresponding to the read out entry words. The selected icon display section 150 extracts icons to be stored in the corresponding element word storage section 124 corresponding to the extracted element words as other icons corresponding to the selected icons (S302). The candidate icon regulating section 160 displays extracted icons as candidate icons which accept the next selection on the screen (S306).

The candidate icon regulating section 160 does not display icons with which an entry word is not extracted based on the icons to be selected and pre-selected icons as candidates to be selected next. Therefore, the candidate icon regulating section 160 displays on the screen the icon which is the next candidate, so that situations in which there are no entry words corresponding to the icons selected by the user can be prevented.

As explained above, the problem solving support apparatus 100 allows the user of the portable telephone 10 to promptly conduct a search for a desired function simply by selecting icons related to the functions of the portable telephone 10.

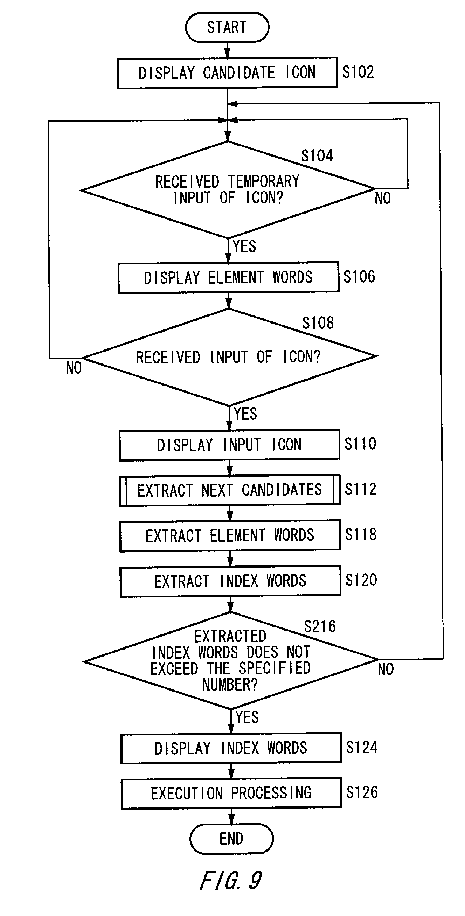

Figure 9 shows a flowchart showing another example of how the problem solving support apparatus 100 works. In step, 9, steps which bear the same reference numeral as Figure 5 have the similar function to that of the steps in Figure 5 in the problem solving support apparatus 100. Therefore, steps with the same reference numerals are not explained. When an icon is selected, the entry word extract section 130 judges whether the number of extracted entry words exceeds the number of entry words that can be displayed within the entry word display frame 90 on the eighth screen 280 (S216). When the number of extracted entry words does not exceed the number of entry words that can be displayed within the entry word display frame 90 (S216: Yes), the entry word extract section 130 displays the extracted entry words (S124). When the number of extracted entry words is no less than that of entry words that can be displayed within the entry word display frame 90 (S216: No), the operation of the problem solving support apparatus 100 returns to step 104. For example, as shown in Figure 7, since the eighth screen 280 can display four entry words within the entry word display frame 90, the entry word extract section 130 displays the extracted entry words when the number of extracted entry words corresponding to the selected icons is four or less. As explained above, the problem solving support apparatus 100 can automatically display extracted entry words when the number of icons displayed on the screen is low.

As explained above, the problem solving support apparatus 100 efficiently extracts problem solving functions about how to use the portable telephone 10 based on user input and enables prompt execution of the program of the extracted program. Since the problem solving support apparatus 100 extracts entry words based on one or more icons selected by the user, the order of the selection of icons by the user does not affect the process. Therefore, the function search of the problem solving support apparatus 100 is different from that of a device with a conventional hierarchical configuration and it allows the user to easily reach functions desired.

According to the embodiments shown in Figure 1 to Figure 9, the problem solving support apparatus 100 has the entry word storage section 122 and the corresponding element word storage section 124, and it connects the entry words specifying the functions of the portable telephone 10 and the icons conceptually related to the entry words using element words. However, there is not only one type of connection between entry words and icons. The entry word storage section 122 can also store entry words and icons which are conceptually connected to the entry words. In this case, the entry word extract section 130 of the problem solving support apparatus 100 refers to the entry word storage section 122 based on the icon selected by the user and directly displays the entry words without using element words. With this process, the corresponding element word storage section 124 is not necessary and the database capacity of the problem solving support apparatus 100 is reduced.

According to the embodiments shown in Figure 1 to Figure 9, the problem solving support apparatus 100 is stored in the portable telephone 10 or other electronic devices and the portable telephone 10 includes the screen 20 and the input section 30. However, the input section 30 can also be arranged in electronic devices. The functions of the candidate icon display section 110, the related icon storage section 120, the entry word extract section 130, the element word storage section 140, the selected icon display section 150, the candidate icon regulating section 160, the execution program storage file 170, and the execution processing section 180 of the problem solving support apparatus 100 are stored in an electronic device and the functions of the input section 30 are stored in a user input device which is a separate unit of the electronic device, where the functions of the input section 30 accept user input for selecting an icon among the plurality of icons displayed on the selected icon display section 150, and output it to the entry word extract section 130. For example, the electronic device is an information home appliance and the user input device is a remote controller for operating the information home appliance. In this situation, the input section 30 may include a Select key (operation key) which allows the user to input. The input section 30 may also include a Cursor Command key which shows the location of the cursor displayed on the selected icon display section 150. According to the present embodiment, a remote controller with a simple configuration can be used as the input section 30 for the problem solving support apparatus 100 of the electronic device.

Although the present invention has been described by way of an exemplary embodiment, it should be understood that those skilled in the art might make many changes and substitutions without departing from the spirit and the scope of the present invention. It is obvious from the definition of the appended claims that embodiments with such modifications also belong to the scope of the present invention.

## Claims

1. A problem solving support apparatus for supporting problem solving for electronic device users based on user input on how to use the device, the device comprising:
a related icon storage section which stores a plurality of icons, which are images having appearance conceptually associated with at least a part of an entry word, in association with the entry word which specifies problem solving functions of the electronic device;
a candidate icon display section which displays at least a part of the plurality of icons that are candidates for accepting selections from outside on a screen; and
an entry word extract section which refers to said related icon storage section to extract the entry word and display the extracted entry word based on combinations of two or more icons when the two or more icons are selected from the icons on the screen displayed by said candidate icon display section.

2. The problem solving support apparatus as claimed in claim 1, wherein
said related icon storage section comprises:
an entry word storage section which stores a plurality of element words indicating concepts of the functions of the entry word in association with the entry words; and
a corresponding element word storage section which stores the icons having the appearance conceptually associated with the element word in association with each of the plurality of the element words, and
said entry word extract section refers to said corresponding element word storage section to extract the element word which corresponds to each of two or more icons, refers to said entry word storage section to extract the entry word which corresponds to at least two element words among the element words from said entry word storage section, and displays the extracted entry word when the two or more icons are selected.

3. The problem solving support apparatus as claimed in claim 2, wherein said corresponding element word storage section associates at least one of the element words with the plurality of icons and stores them.

4. The problem solving support apparatus as claimed in claim 3, wherein said corresponding element word storage section associates at least one of the icons with the plurality of element words and stores them.

5. The problem solving support apparatus as claimed in claim 2, further comprising an element word display section which displays the element word corresponding to the tentatively selected icon when the icon is tentatively selected.

6. The problem solving support apparatus as claimed in claim 1, wherein said entry word extract section requires an input of a decision command for search after two or more icons, among the plurality of icons displayed on the screen by said candidate icon display section, are selected, and displays the entry word triggered by the input of the decision command for search.

7. The problem solving support apparatus as claimed in claim 6, further comprising a select icon display section which displays the two or more selected icons on the screen.

8. The problem solving support apparatus as claimed in claim 1, further comprising a candidate icon regulating section which refers to said related icon storage section to extract other icons which correspond to said entry word corresponding to the selected icon and receives selections of the other extracted icons when the icon is selected among the icons on the screen displayed by said candidate icon display section.

9. The problem solving support apparatus as claimed in claim 8, wherein said candidate icon regulating section displays the extracted icons excluding the other icons stored in said related icons storage section on the screen.

10. The problem solving support apparatus as claimed in claim 8, wherein said candidate icon regulating section distinguishes the extracted icons from the other icons stored in said related icon storage section and displays them on the screen.

11. The problem solving support apparatus as claimed in claim 1, wherein said entry word extract section displays the entry word on the screen when the number of the extracted entry words is less than a predetermined number.

12. The problem solving support apparatus as claimed in claim 11, wherein said entry word extract section displays the entry word on the screen when the number of the entry words to be displayed on the screen is less than the predetermined number.

13. The problem solving support apparatus as claimed in claim 1, further comprising:
an execution program group storage file which stores an execution program for executing the functions for the problem solving which correspond to entry words specifying the functions of the electronic devices for the problem solving; and
a processing section which refers to said execution program group storage file to execute the execution program corresponding to the specified entry words when an execution command for the displayed entry word is input.

14. A method for supporting problem solving for electronic device users based on user input on how to use the device, comprising steps of:
storing a plurality of icons, which are images having appearance conceptually associated with at least a part of an entry word, in association with the entry word which specifies problem solving functions of the electronic device;
displaying at least a part of the plurality of icons that are candidates for accepting selections from outside on a screen;
referring to the related icon storage section to extract the entry word based on combinations of two or more icons when the two or more icons are selected from the icons displayed on the screen; and
displaying the extracted entry word.

15. A computer readable medium storing thereon a program for supporting problem solving for electronic device users based on user input on how to use the device, wherein the program causes a computer to function as:
related icon storage means for storing a plurality of icons, which are images having appearance conceptually associated with at least a part of an entry word, in association with the entry word which specifies problem solving functions of the electronic device;
candidate icon display means for displaying at least a part of the plurality of icons that are candidates for accepting selections from outside on a screen; and
entry word extract means for referring to said related icon storage means to extract the entry word and display the extracted entry word based on combinations of two or more icons when the two or more icons are selected from the icons on the screen displayed by said candidate icon display section.

16. A problem solving support system for supporting problem solving for electronic device users based on user input on how to use the device, comprising a problem solving support apparatus stored in the electronic device and a user input device which is a separate unit of the problem solving support apparatus, wherein said problem solving support apparatus comprises:
a related icon storage section which stores a plurality of icons, which are images having appearance conceptually associated with at least a part of an entry word, in association with the entry word which specifies problem solving functions of the electronic device;
a candidate icon display section which displays at least a part of the plurality of icons that are candidates for accepting selections from outside on a screen; and
an entry word extract section which refers to said related icon storage section to extract the entry word and display the extracted entry word based on combinations of two or more icons when the two or more icons are selected from the icons on the screen displayed by said candidate icon display section, and
said user input device receives input from the users for selecting an icon from the plurality of icons displayed on said candidate icon display section and outputs it to said entry word extract section.
